# EUROPEAN PATENT APPLICATION

(11) **EP 3 907 630 A1**
(43) Date of publication of application: **10.11.2021**
(21) Application number: 19907532.6
(22) Date of filing: 10.09.2019
(51) Int. Cl.: G06F 16/9032

(54) **TIME ZONE DETERMINATION METHOD AND APPARATUS, WEARABLE DEVICE AND SYSTEM**

(30) Priority: 03.01.2019 CN 201910004178
(71) Applicant: Anhui Huami Information Technology Co., Ltd., Hefei, Anhui 230088 (CN)
(72) Inventor: ZHOU, Rui, Hefei, Anhui 230088 (CN); FAN, Meihui, Hefei, Anhui 230088 (CN); DUAN, Xiong, Hefei, Anhui 230088 (CN)
(74) Representative: Bandpay & Greuter
(86) International application number: PCT/CN2019/105113
(87) International publication number: WO 2020/140472

(57) **Abstract**

The present disclosure provides a time zone determination method and apparatus, a wearable device, and a system, where the time zone determination method includes: acquiring first data for characterizing the geographic location at which a first terminal is located, the first data being two-dimensional latitude and longitude data; converting the first data into second data according to a specified encoding algorithm, the second data being one-dimensional character string data; querying a first time zone corresponding to the second data in a specified mapping table for time zone determination, the specified mapping table including correspondence relationships between specified character strings and specified time zones; and if it is determined that the first time zone is found, determining the first time zone to be the time zone in which the first terminal is located. Therefore, the present disclosure achieves the function of using the specified mapping table to determine a time zone in an offline state, reduces the calculation complexity and the amount of data on which the calculation is dependent, and improves the efficiency of time zone determination.

## Description

### TECHNICAL FIELD

The present disclosure relates to the technical field of information technology, and more particularly relates to a time zone determination method and apparatus, a wearable device, and a system.

### BACKGROUND

With the continuous development of information technology, wearable devices have also been widely used. In the related art, when in a networked state, the wearable device can determine the time zone in which the device is currently located through an existing network service. However, when in an offline state, the wearable device cannot determine the time zone in which the device is currently located through the existing network service, such that the practicality of the wearable device is reduced.

### SUMMARY

In view of this, the present disclosure provides a time zone determination method and apparatus, a wearable device, and a system so as to solve the defects in the related art.

According to a first aspect of an embodiment of the present disclosure, a time zone determination method is provided, and the method is used for a first terminal and includes:
acquiring first data for characterizing a geographic location at which the first terminal is located, the first data being two-dimensional latitude and longitude data;
converting the first data into second data according to a specified encoding algorithm, the second data being one-dimensional character string data;
querying a first time zone corresponding to the second data in a specified mapping table for time zone determination, the specified mapping table including correspondence relationships between specified character strings and specified time zones; and
determining the first time zone to be the time zone in which the first terminal is located if it is determined that the first time zone is found.

According to a second aspect of the embodiment of the present disclosure, the provided method is based on the method of the first aspect, and the method is used for a second terminal that generates the specified mapping table and includes:
generating a first list, the first list including a first quantity of set character strings, the set character strings being constructed by the second terminal according to the specified encoding algorithm rule;
determining latitude and longitude coordinates corresponding to the set character strings to obtain a second mapping table, the second mapping table including the set character strings and the latitude and longitude coordinates corresponding to the set character strings;
determining time zones corresponding to the latitude and longitude coordinates, and using the determined time zones as the time zones of the corresponding set character strings to obtain a third mapping table, the third mapping table including the set character strings and the time zones corresponding to the set character strings;
filtering and aggregating the third mapping table to obtain the specified mapping table for time zone determination, the specified mapping table including a corresponding relationship between the specified character strings and the specified time zones; and
outputting the specified mapping table.

According to a third aspect of the embodiment of the present disclosure, a time zone determination apparatus is provided, and the apparatus is used for a first terminal and includes:
an acquiring module, configured to acquire first data for characterizing a geographic location at which the first terminal is located, the first data being two-dimensional latitude and longitude data;
an encoding module, configured to convert the first data into second data according to a specified encoding algorithm, the second data being one-dimensional character string data;
a querying module, configured to query a first time zone corresponding to the second data in a specified mapping table for time zone determination, the specified mapping table including correspondence relationships between specified character strings and specified time zones; and
a time zone determining module, configured to determine the first time zone to be the time zone in which the first terminal is located if it is determined that the first time zone is found.

According to a fourth aspect of the embodiment of the present disclosure, the provided apparatus is based on the apparatus of the third aspect, and the apparatus is used for a second terminal for generating the specified mapping table and includes:
a generating module, configured to generate a first list, the first list including a first quantity of set character strings, and the set character strings being constructed by the second terminal according to the specified encoding algorithm rule;
a first determining module, configured to determine latitude and longitude coordinates corresponding to the set character strings to obtain a second mapping table, the second mapping table including the set character strings and the latitude and longitude coordinates corresponding to the set character strings;
a second determining module, configured to determine time zones corresponding to the latitude and longitude coordinates, and use the determined time zones as the time zones of the corresponding set character strings to obtain a third mapping table, the third mapping table including the set character strings and the time zones corresponding to the set character strings;
a compression module, configured to filter and aggregate the third mapping table to obtain the specified mapping table for time zone determination, the specified mapping table including a corresponding relationship between the specified character strings and the specified time zones; and
an output module, configured to output the specified mapping table.

According to a fifth aspect of the embodiment of the present disclosure, a time zone determination apparatus is provided, and the apparatus is used for the first terminal and includes:
a processor; and
a memory configured to store processor executable instructions,
where the processor is configured to:
acquire first data for characterizing a geographic location at which the first terminal is located, the first data being two-dimensional latitude and longitude data;
convert the first data into second data according to a specified encoding algorithm, the second data being one-dimensional character string data;
query a first time zone corresponding to the second data in a specified mapping table for time zone determination, the specified mapping table including correspondence relationships between specified character strings and specified time zones; and
determine the first time zone to be the time zone in which the first terminal is located if it is determined that the first time zone is found.

According to a sixth aspect of the embodiment of the present disclosure, the provided apparatus is built on the basis of the apparatus of the fifth aspect, and the apparatus is used for a second terminal for generating the specified mapping table and includes:
a processor; and
a memory configured to store processor executable instructions,
where the processor is configured to
generate a first list, the first list including a first quantity of set character strings, and the set character strings being constructed by the second terminal according to a specified encoding algorithm rule;
determine latitude and longitude coordinates corresponding to the set character strings to obtain a second mapping table, the second mapping table including the set character strings and the latitude and longitude coordinates corresponding to the set character strings;
determine time zones corresponding to the latitude and longitude coordinates, and use the determined time zones as the time zones of the corresponding set character strings to obtain a third mapping table, the third mapping table including the set character strings and the time zones corresponding to the set character strings;
filter and aggregate the third mapping table to obtain the specified mapping table for time zone determination, the specified mapping table including a corresponding relationship between the specified character strings and the specified time zones; and
output the specified mapping table.

In a seventh aspect of the embodiment of the present disclosure, a wearable device is provided, and the wearable device includes the time zone determination apparatus according to the third aspect and executes the time zone determination method according to the first aspect.

In an eighth aspect of the embodiment of the present disclosure, a time zone determination system is provided. The time zone determination system includes a first terminal and/or a second terminal, the first terminal includes the time zone determination apparatus according to the third aspect and executes the time zone determination method according to the first aspect; and the second terminal includes the time zone determination apparatus according to the fourth aspect and executes the time zone determination method according to the second aspect.

The technical solution provided by the embodiment of the present disclosure may include the following beneficial effects:
After the first terminal of the present disclosure acquires the first data for characterizing a geographic location at which the first terminal is located, the first data can be converted into second data according to a specified encoding algorithm, and the second data is one-dimensional character string data. Additionally, a first time zone corresponding to the second data is queried in a specified mapping table for time zone determination, and if it is determined that the first time zone is found, the first time zone is determined to be the time zone in which the first terminal is located, such that a function of determining the time zone in an offline state by using the specified mapping table is achieved, the calculation complexity and the amount of data on which the calculation is dependent are reduced, and the efficiency of time zone determination is improved.

The second terminal of the present disclosure can firstly generate a first list, then determine the latitude and longitude coordinates of the set character strings to obtain a second mapping table, determine the time zone corresponding to the latitude and longitude coordinate, use the determined time zone as the time zone of the corresponding set character strings to obtain the third mapping table, then filter and aggregate the third mapping table to obtain the specified mapping table for time zone determination (the specified mapping table includes a corresponding relationship between the specified character strings and the specified time zone), and output an ordered specified mapping table. Therefore, the first terminal in an offline state can conveniently use the specified mapping table to perform time zone determination, so that the realization modes of the time zone determination are enriched, and the practicability of the time zone determination is improved.

It should be understood that the above general descriptions and the following detailed descriptions are only exemplary and explanatory, and do not limit the present disclosure.

### BRIEF DESCRIPTION OF THE DRAWINGS

The drawings herein are incorporated into and constitute a part of the specification, show embodiments consistent with the present disclosure, and are used to explain the principles of the present disclosure together with the specification.
FIG. 1 is a flow chart of a time zone determination method shown according to an exemplary embodiment of the present disclosure.
FIG. 2 is a flow chart of another time zone determination method shown according to an exemplary embodiment of the present disclosure.
FIG. 3 is a flow chart of another time zone determination method shown according to an exemplary embodiment of the present disclosure.
FIG. 4 is a flow chart of a time zone determination method shown according to an exemplary embodiment of the present disclosure.
FIG. 5 is a block diagram of a time zone determination apparatus shown according to an exemplary embodiment of the present disclosure.
FIG. 6 is a block diagram of another time zone determination apparatus shown according to an exemplary embodiment of the present disclosure.
FIG. 7 is a block diagram of another time zone determination apparatus shown according to an exemplary embodiment of the present disclosure.
FIG. 8 is a block diagram of another time zone determination apparatus shown according to an exemplary embodiment of the present disclosure.
FIG. 9 is a block diagram of another time zone determination apparatus shown according to an exemplary embodiment of the present disclosure.
FIG. 10 is a block diagram of another time zone determination apparatus shown according to an exemplary embodiment of the present disclosure.
FIG. 11 is a block diagram of a time zone determination apparatus shown according to an exemplary embodiment of the present disclosure.
FIG. 12 is a block diagram of another time zone determination apparatus shown according to an exemplary embodiment of the present disclosure.
FIG. 13 is a block diagram of another time zone determination apparatus shown according to an exemplary embodiment of the present disclosure.
FIG. 14 is a block diagram of another time zone determination apparatus shown according to an exemplary embodiment of the present disclosure.
FIG. 15 is a block diagram of another time zone determination apparatus shown according to an exemplary embodiment of the present disclosure.
FIG. 16 is a schematic structure diagram of an apparatus applicable to time zone determination shown according to an exemplary embodiment of the present disclosure.
FIG. 17 is a schematic structure diagram of an apparatus applicable to time zone determination shown according to an exemplary embodiment of the present disclosure.

### DETAILED DESCRIPTION OF THE EMBODIMENTS

Exemplary embodiments will be described in detail herein, and examples of those exemplary embodiments are shown in the drawings. When referring to the drawings below, unless otherwise specified, the same numerals in different drawings represent the same or similar elements. The embodiments described in the following exemplary embodiments do not represent all embodiments consistent with the present disclosure. Oppositely, they are merely examples of apparatuses and methods consistent with some aspects of the present disclosure as detailed in the appended claims.

Terms used in the present disclosure are for the purpose of describing specific embodiments only, and are not intended to limit the present disclosure. The singular forms "a," "said," and "the" used in the present disclosure and the appended claims are also intended to include the plural forms unless the context clearly indicates other meanings. It should also be understood that the term "and/or" as used herein refers to and encompasses any or all possible combinations of one or more associated listed items.

It should be understood that although the terms first, second, third, etc. may be used to describe various information in the present disclosure, the information should not be limited to these terms. These terms are only used to distinguish the same type of information from each other. For example, without departing from the scope of the present disclosure, the first information may also be referred to as second information, and similarly, the second information may also be referred to as first information. Depending on the context, the word "if' as used herein can be interpreted as "when" or "while" or "in response to a determination."

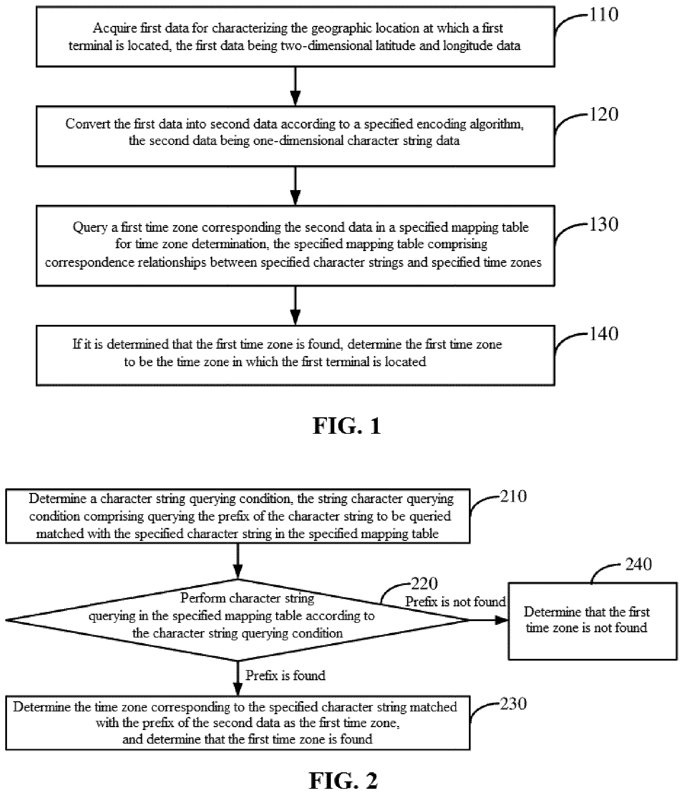

FIG. 1 is a flow chart of a time zone determination method shown according to an exemplary embodiment of the present disclosure. The time zone determination method can be used for a first terminal. For example, the first terminal is a wearable device, in particular, a smart bracelet, a smart watch, and the like. For example, the first terminal is a vehicle-mounted navigator or a track recorder with limitations to storage and networking. As shown in FIG. 1, the time zone determination method may include the following steps.

In step 110, first data for characterizing a geographic location at which the first terminal is located is acquired, where the first data is two-dimensional latitude and longitude data.

In the embodiment of the present disclosure, the first terminal can be a terminal which is in an offline state and has a limitation on a local data storage space. The offline state can refer to not being connected to network in any way, for example, not having a Bluetooth connection with a smartphone, not having a data network enabled, and not being connected to a WLAN (Wireless Local Area Network), etc.

In an embodiment, when step 110 is executed, the first data can be acquired through a specified positioning module. By taking a GPS (Global Positioning System) as an example, although a first device is in an offline state, a GPS module can perform calculation by receiving a GPS satellite signal to obtain the current longitude and latitude.

The specified positioning module can be a positioning module provided in the first terminal, and can also be other positioning modules used by the first terminal. Additionally, the types of the specified positioning module are various, and may also be Beidou, Galileo, Glonass, and the like besides GPS, and it is not limited in the present disclosure.

In step 120, the first data is converted into second data according to a specified encoding algorithm, where the second data is one-dimensional character string data.

In the embodiment of the present disclosure, the specified encoding algorithm can refer to an algorithm specifically used for converting two-dimensional longitude and latitude data into one-dimensional character string data.

In an embodiment, the specified encoding algorithm in step 120 may include a GeoHash algorithm or a Google-S2 algorithm.

For example, if the specified encoding algorithm is the GeoHash algorithm, the first terminal can convert the two-dimensional longitude and latitude data into the one-dimensional character string data through the GeoHash algorithm in this case.

In step 130, a first time zone corresponding to the second data is queried in a specified mapping table for time zone determination, where the specified mapping table includes correspondence relationships between specified character strings and specified time zones.

In the embodiment of the present disclosure, the specified mapping table can be a mapping table specially set for the time zone determination. The specified mapping table includes the correspondence relationship between the specified character strings and the specified time zones, so that the first terminal can query the time zone in which the first terminal is currently located according to the specified mapping table.

In an embodiment, the specified mapping table in step 130 can be a mapping table obtained by the second terminal aggregating all the set character strings having the same character string prefix and corresponding to the same time zone, where the set character string is constructed by the second terminal according to a specified encoding algorithm rule, the specified character string is a prefix of the set character strings, and the specified time zone is the time zone corresponding to the set character strings.

The first terminal can be an application party of the specified mapping table, and the second terminal can be a setting party of the specified mapping table. For example, the first terminal is a wearable device, and the specified mapping table can be used as a firmware resource file deployed into a local storage space. The second terminal is a PC (Personal Computer) or a high-performance computer, and can generate the specified mapping table and output the specified mapping table.

Additionally, the first terminal can be both an application party of the specified mapping table and a setting party of the specified mapping table, and its purpose of generating the specified mapping table is to quickly determine the time zone in which the first terminal is currently located in an offline state.

A method for generating the specified mapping table is described below, and is not repeated here.

In step 140, if it is determined that the first time zone is found, the first time zone is determined to be the time zone in which the first terminal is located.

In one embodiment, after step 130 is executed, besides the condition that the first time zone is found in step 140, the condition that the first time zone is not found may also occur, and its realization mode may include:
(1-1) If it is determined that the first time zone is not found, the time zone in which the first terminal is located at present is calculated according to longitude information in the longitude and latitude data.

Through the above embodiment, it can be seen that after the first data for characterizing a geographic location at which the first terminal is located is acquired, the first data can be converted into second data according to a specified encoding algorithm, and the second data is one-dimensional character string data. Additionally, a first time zone corresponding to the second data is queried in a specified mapping table for time zone determination, and if it is determined that the first time zone is found, the first time zone is determined to be the time zone in which the first terminal is located, so that a function of determining the time zone in an offline state by using the specified mapping table is achieved, the calculation complexity and the amount of data on which the calculation is dependent are reduced, and the efficiency of time zone determination is improved.

FIG. 2 is a flow chart of a time zone determination method shown according to an exemplary embodiment of the present disclosure. The time zone determination method can be used for the first terminal, and is based on the method shown in FIG. 1. As shown in FIG. 2, when step 130 is executed, the following steps may be included.

In step 210, a character string querying condition is determined, the character string querying condition including querying a prefix of a character string to be queried matched with the specified character string in the specified mapping table.

In the embodiment of the present disclosure, the specified mapping table is a mapping table obtained by the second terminal aggregating all the set character strings having the same character string prefix and corresponding to the same time zone, where the set character string is constructed by the second terminal according to a specified encoding algorithm rule. The specified character string in the specified mapping table is a prefix of the set character strings, and the specified time zone in the specified mapping table is the time zone corresponding to the set character strings. Therefore, during querying, the present disclosure is to use the specified character strings in the specified mapping table as the prefix of the character string to be queried for querying.

In step 220, character string querying is performed in the specified mapping table according to the character string querying condition, the second data being the character string to be queried.

In step 230, if a prefix of the second data matched with the specified character string is found in the specified mapping table, a time zone corresponding to the specified character string matched with the prefix of the second data is determined as the first time zone, and it is determined that the first time zone is found.

In step 240, if the prefix of the second data is not found in the specified mapping table, it is determined that the first time zone is not found.

In one embodiment, besides the condition that the first time zone is found in step 230, the condition that the first time zone is not found may also occur, and its realization mode may include:
(2-1) If it is determined that the first time zone is not found, the time zone in which the first terminal is located at present is calculated according to longitude information in the longitude and latitude data.

From the above embodiment, the character string querying condition can be firstly determined, the character string querying condition includes querying the prefix of the character string to be queried matched with the specified character string in the specified mapping table, then performing character string querying in the specified mapping table according to the character string querying condition. Determining the time zone corresponding to the specified character string matched with the prefix of the second data as the first time zone and determining that the first time zone is found if the prefix of the second data matched with the specified character string is found in the specified mapping table. Determining that the first time zone is not found and calculating the time zone in which the first terminal is currently located according to the longitude information in the longitude and latitude data if the prefix of the second data is not found in the specified mapping table. Therefore, the time zone querying accuracy is improved.

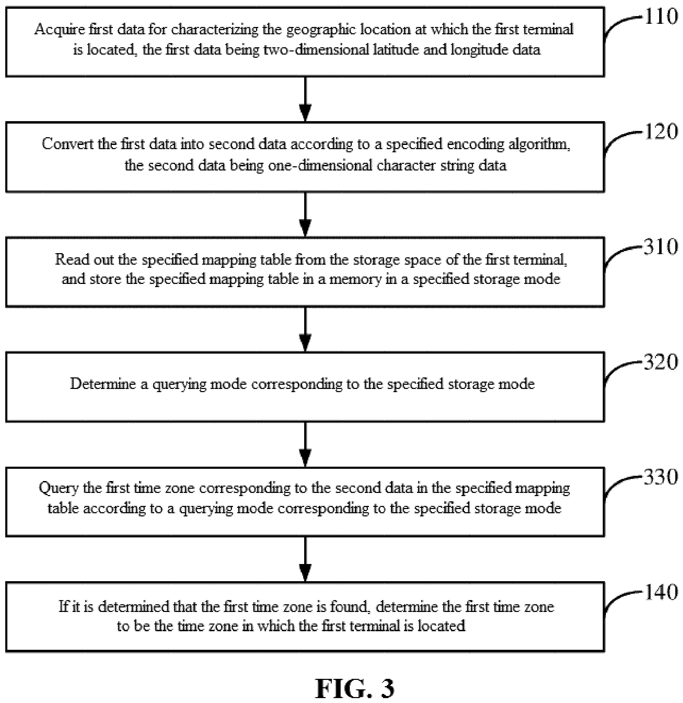

FIG. 3 is a flow chart of another time zone determination method shown according to an exemplary embodiment of the present disclosure. The time zone determination method can be used for the first terminal, and is based on the method shown in FIG. 1. The specified mapping table is used as a firmware resource file deployed in the storage space of the first terminal. As shown in FIG. 3, before step 130 is executed, the following step may be included.

In step 310, the specified mapping table is read out from the storage space of the first terminal, and the specified mapping table is stored in a memory in a specified storage mode.

In the embodiment of the present disclosure, the specified storage mode can be relevant to the memory resource conditions, and the first terminal can determine the corresponding specified storage mode according to the memory resource conditions.

In an embodiment, the specified storage mode in step 310 may include a hash storage mode or an ordered storage mode. For example, when the memory resource is sufficient, the specified mapping table can be stored in the hash storage mode in the memory. For another example, when the memory resource is limited, the specified mapping table can be stored in the ordered storage mode in the memory.

Correspondingly, when step 130 is executed, the following steps may be included:
In step 320, a querying mode corresponding to the specified storage mode is determined.

In an embodiment, if the specified storage mode includes the hash storage mode or the ordered storage mode, when the step 310 is executed, the following steps may be included:
(3-1) If the specified storage mode is the hash storage mode, the corresponding querying mode is determined to be a direct querying mode; and
(3-2) If the specified storage mode is the ordered storage mode, the corresponding querying mode is determined to be a binary querying mode.

In step 330, the first time zone corresponding to the second data is queried in the specified mapping table according to the querying mode corresponding to the specified storage mode.

In the embodiment of the present disclosure, during querying, the direct querying mode or the binary querying mode can be adopted, and the needed time complexities are respectively 0(1) and O(logN).

From the above embodiment, it can be seen that the specified mapping table is used as a firmware resource file deployed in the storage space of the first terminal, so that before the specified mapping table is used, the specified mapping table can be read out from the storage space of the first terminal, the specified mapping table is stored in the memory in the specified storage mode, then, the first time zone corresponding to the second data is queried from the specified mapping table in a querying mode corresponding to the specified storage mode, and thus the time zone querying flexibility is improved.

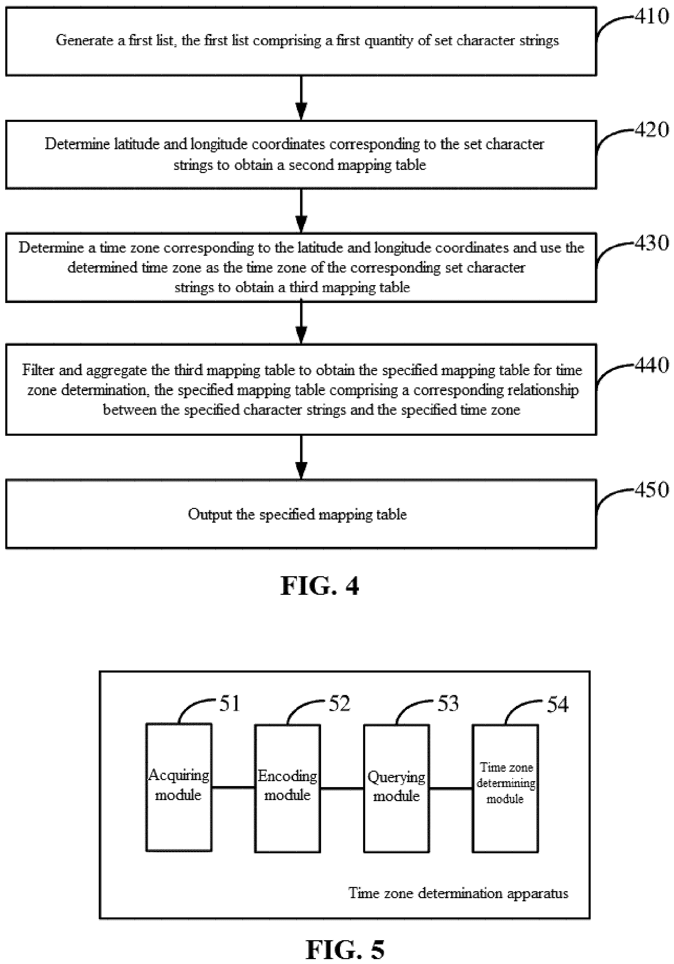

FIG. 4 is a flow chart of another time zone determination method shown according to an exemplary embodiment of the present disclosure. The time zone determination method is based on the method shown in FIG. 1, and is used for the second terminal that generates the specified mapping table, such as a PC or a high-performance computer. As shown in FIG. 4, the process of generating the specified mapping table may include the following steps.

In step 410, a first list is generated, the first list includes a first quantity of set character strings, and the set character strings are constructed by the second terminal according to a specified encoding algorithm rule.

In the embodiment of the present disclosure, the specified encoding algorithm can refer to an algorithm specifically used for converting two-dimensional longitude and latitude data into one-dimensional character string data. In an embodiment, the specified encoding algorithm in step 410 may include a GeoHash algorithm or a Google-S2 algorithm.

The second terminal can firstly determine a number of bit and a character value range of the set character strings according to the specified encoding algorithm rule, and then set the character strings according to a character string enumeration mode.

For example, if the specified encoding algorithm is the GeoHash algorithm, the number N of bit of GeoHash can be determined according to a preset data precision requirement. For example, N is 4. According to the definition of GeoHash, the value range of each bit is "0123456789bcdefghjkmnpqrstuvwxyz", and combinations of N bits of all of the above values are enumerated to be used as the first list. Its specific mode is that an N-layered loop is built, in each layer of the loop, the N^{th} bit of geohash string is traversed from 0 to z, so that the first list of all possible values of N-bit set character strings can be constructed.

In step 420, latitude and longitude coordinates corresponding to the set character strings are determined to obtain a second mapping table, and the second mapping table includes the set character strings and the latitude and longitude coordinates corresponding to the set character strings.

In an embodiment, when step 420 is executed, the following step may be included:
(4-1) The latitude and longitude coordinates corresponding to the set character strings are determined through a decoding algorithm corresponding to the specified encoding algorithm.

In an embodiment, the specified encoding algorithm in step (4-1) may include a GeoHash algorithm or a Google-S2 algorithm. For example, if the specified encoding algorithm is the GeoHash algorithm, the second terminal can determine the latitude and longitude coordinates corresponding to the set character strings through a decoding algorithm corresponding to the GeoHash algorithm.

In step 430, time zones corresponding to the latitude and longitude coordinates respectively are determined, the determined time zones are used as the time zones of the corresponding set character strings to obtain a third mapping table, and the third mapping table includes the set character strings and the time zones corresponding to the set character strings.

In an embodiment, when step 430 is executed, the following steps may be included:
(5-1) The time zone corresponding to the latitude and longitude coordinates is queried in an on-line public service interface calling mode;
(5-2) If the time zone corresponding to the latitude and longitude coordinates is found, the found time zone is set to be the time zone corresponding to the set character strings; and
(5-3) If the time zone corresponding to the latitude and longitude coordinates is not found, the time zone corresponding to the set character strings is set to null.

In (5-1), besides adopting the on-line public service interface calling mode for querying, other modes can also be used for querying, for example, an area in which the longitude and latitude correspondingly fall is found out on the basis of a geometric polygon algorithm, and then, the corresponding time zone is obtained according to the area.

In step 440, the third mapping table is filtered and aggregated to obtain the specified mapping table for time zone determination, where the specified mapping table includes a corresponding relationship between the specified character strings and the specified time zones.

In an embodiment, when step 440 is executed, the following steps may be included:
(6-1) The set character strings in the third mapping table without the corresponding time zone found or without a corresponding time zone are removed to obtain a filtered fourth mapping table; and
(6-2) The set character strings having the same character string prefix and corresponding to the same time zone in the fourth mapping table are aggregated to obtain the specified mapping table, where the specified character string in the specified mapping table is the prefix of the set character strings, and the specified time zone is the time zone corresponding to the set character strings. The aggregation conditions are as follows: only when all the set character strings having the same character string prefix correspond to a same time zone, and no inconsistency exists, aggregating is performed. The stop condition is that a prefix conforming to the aggregation conditions is not found.

For example, the set character string 1 is bcde, the set character string 2 is bcdf, the time zone corresponding to the set character string 1 is UTC, the time zone corresponding to the set character string 2 is also UTC, additionally, and there is no set character string with bed as the prefix. At this moment, the set character string 1 and the set character string 2 can be aggregated, the specified character string after the aggregation is bcd, and the specified time zone corresponding to the specified character string is UTC.

The specified mapping table obtained in (6-2) is the mapping table obtained after filtration and aggregation, and its size does not reach 1 MB, so that the specified mapping table is more suitable to be used in a terminal with storage limitation, such as a wearable device, a vehicle-mounted navigator, or a track recorder.

In step 450, the specified mapping table is output.

In an embodiment, when step 450 is executed, the following steps may be included:
(7-1) All the specified character strings in the specified mapping table are sequenced according to a specified sequence; and
(7-2) The ordered specified mapping table is output.

The specified sequence in (7-1) can be sequenced according to values of GeoHash, for example, sequence the specified character strings in lexicographic order.

From the above embodiments, it can be seen that a first list can be firstly generated, then the latitude and longitude coordinates corresponding to the set character strings are determined to obtain the second mapping table. The time zones corresponding to the latitude and longitude coordinates are determined, and the determined time zones are used as the time zones of the corresponding set character strings to obtain the third mapping table. Then the third mapping table is filtered and aggregated to obtain the specified mapping table for time zone determination, and the specified mapping table includes a corresponding relationship between the specified character strings and the specified time zones. The ordered specified mapping table is output. Therefore, the first terminal in an offline state can conveniently use the specified mapping table to perform time zone determination, so that the realization modes of the time zone determination are enriched, and the practicability of the time zone determination is improved. Additionally, the size of the mapping table after filtration and aggregation does not reach 1 MB, so that the specified mapping table is more suitable to be used in a terminal with storage limitation.

Corresponding to the above embodiments of the time zone determination method, the present disclosure further provides an embodiment of a time zone determination apparatus.

As shown in FIG. 5, FIG. 5 is a block diagram of a time zone determination apparatus shown according to an exemplary embodiment of the present disclosure. The apparatus can be used for a first terminal. For example, the first terminal is a wearable device, in particular, a smart bracelet, a smart watch, and the like. For another example, the first terminal is a vehicle-mounted navigator or a track recorder with limitations to storage and networking. The apparatus is used for executing the time zone determination method as shown in FIG. 1. As shown in FIG. 5, the apparatus may include:
an acquiring module 51, configured to acquire first data for characterizing a geographic location at which the first terminal is located, the first data being two-dimensional latitude and longitude data;
an encoding module 52, configured to convert the first data into second data according to a specified encoding algorithm, the second data being one-dimensional character string data;
a querying module 53, configured to query a first time zone corresponding to the second data in a specified mapping table for time zone determination, the specified mapping table including correspondence relationships between specified character strings and specified time zones; and
a time zone determining module 54, configured to determine the first time zone to be the time zone in which the first terminal is located if it is determined that the first time zone is found.

Through the above embodiment, it can be seen that after the first data is acquired, the first data can be converted into second data according to a specified encoding algorithm, and the second data is one-dimensional character string data. Additionally, a first time zone corresponding to the second data is queried in a specified mapping table for time zone determination. If it is determined that the first time zone is found, the first time zone is determined to be the time zone in which the first terminal is currently located, so that a function of determining the time zone in an offline state by using the specified mapping table is achieved, the calculation complexity and the amount of data on which the calculation is dependent are reduced, and the efficiency of time zone determination is improved.

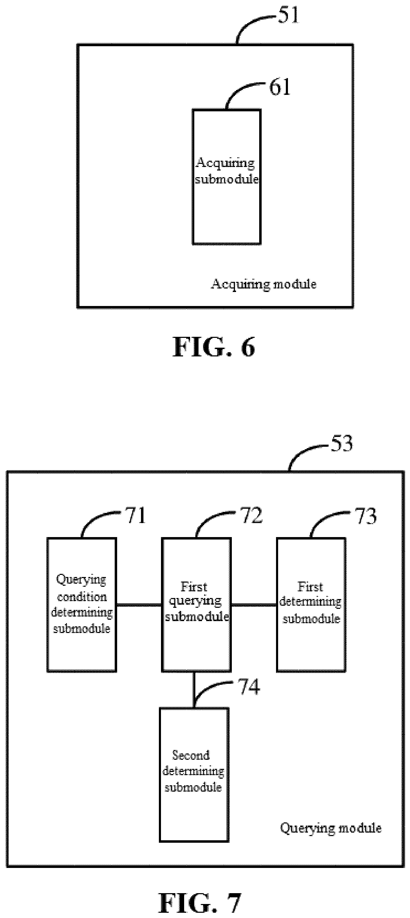

In an embodiment, on the basis of the apparatus shown in FIG. 5, as shown in FIG. 6, the acquiring module 51 may include:
an acquiring submodule 61, configured to acquire the first data through a specified positioning module.

In an embodiment, on the basis of the apparatus shown in FIG. 5, the specified encoding algorithm includes a GeoHash algorithm or a Google-S2 algorithm.

In an embodiment, on the basis of the apparatus shown in FIG. 5, as shown in FIG. 7, the querying module 53 may include:
a querying condition determining submodule 71, configured to determine a character string querying condition, the character string querying condition including querying a prefix of a character string to be queried matched with the specified character string in the specified mapping table;
a first querying submodule 72, configured to perform character string querying in the specified mapping table according to the character string querying condition, the second data being the character string to be queried;
a first determining submodule 73, configured to determine a time zone corresponding to the specified character string matched with the prefix of the second data as the first time zone, and determine that the first time zone is found if a prefix of the second data matched with the specified character string is found in the specified mapping table; and
a second determining submodule 74, configured to determine that the first time zone is not found if the prefix of the second data is not found in the specified mapping table.

From the above embodiment, it can be seen that the character string querying condition can be firstly determined, the character string querying condition includes querying the prefix of the character string to be queried matched with the specified character string in the specified mapping table, then performing character string querying in the specified mapping table according to the character string querying condition, determining the time zone corresponding to the specified character string matched with the prefix of the second data as the first time zone and determining that the first time zone is found if the prefix of the second data matched with the specified character string is found in the specified mapping table, and determining that the first time zone is not be found if the prefix of the second data is not found in the specified mapping table. The time zone querying accuracy is improved.

In an embodiment, on the basis of the apparatus shown in FIG. 5, the specified mapping table is a mapping table obtained by a second terminal aggregating all set character strings having the same character string prefix and corresponding to the same time zone, where the set character strings are constructed by the second terminal according to a specified encoding algorithm rule.

The specified character string is a prefix of the set character strings, and the specified time zone is a time zone corresponding to the set character strings.

In an embodiment, on the basis of the apparatus shown in FIG. 5, the specified mapping table is used as a firmware resource file deployed in a storage space of the first terminal.

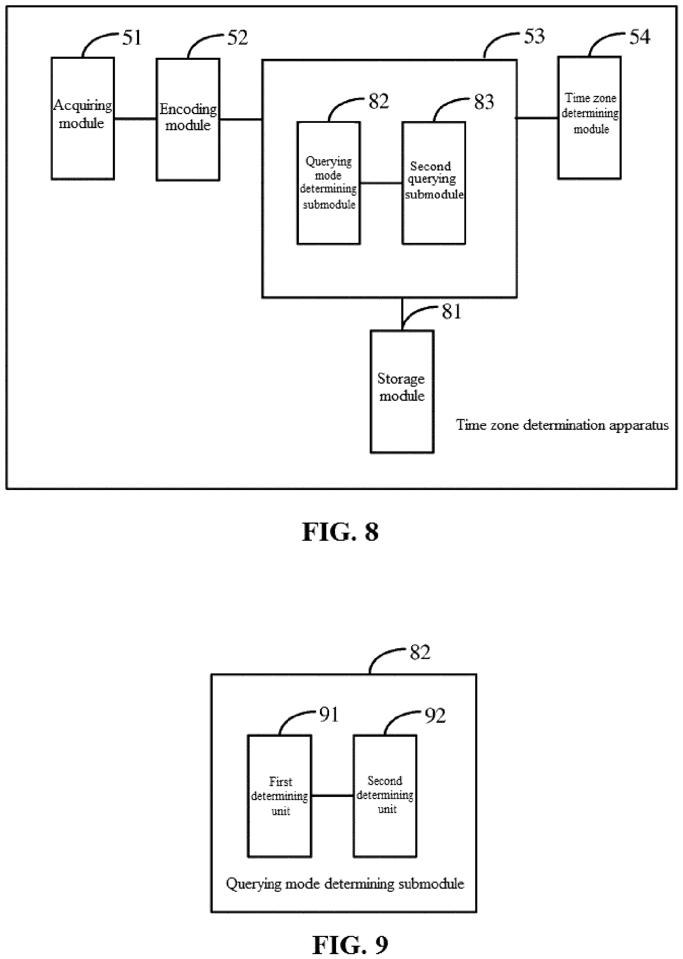

In an embodiment, on the basis of the apparatus shown in FIG. 5, the specified mapping table is used as a firmware resource file deployed in the storage space of the first terminal. As shown in FIG. 8, the apparatus may further include:
a storage module 81, configured to read out the specified mapping table from the storage space, and store the specified mapping table in a memory in a specified storage mode; and the querying module 53 may include:
a querying mode determining submodule 82, configured to determine a querying mode corresponding to the specified storage mode; and
a second querying submodule 83, configured to query the first time zone corresponding to the second data in the specified mapping table according to the corresponding querying mode.

In an embodiment, on the basis of the apparatus shown in FIG. 8, as shown in FIG. 9, the specified storage mode includes a hash storage mode or an ordered storage mode. The querying mode determining submodule 82 may include:
a first determining unit 91, configured to determine that the corresponding querying mode is a direct querying mode if the specified storage mode is the hash storage mode; and
a second determining unit 92, configured to determine that the corresponding querying mode is a binary querying mode if the specified storage mode is the ordered storage mode.

From the above embodiment, it can be seen that the specified mapping table is used as a firmware resource file deployed in the storage space of the first terminal, so that before the specified mapping table is used, the specified mapping table can be read out from the storage space of the first terminal, and the specified mapping table is stored in the memory in a specified storage mode. Then, the first time zone corresponding to the second data is queried from the specified mapping table in a querying mode corresponding to the specified storage mode. Thus, the time zone querying flexibility is improved.

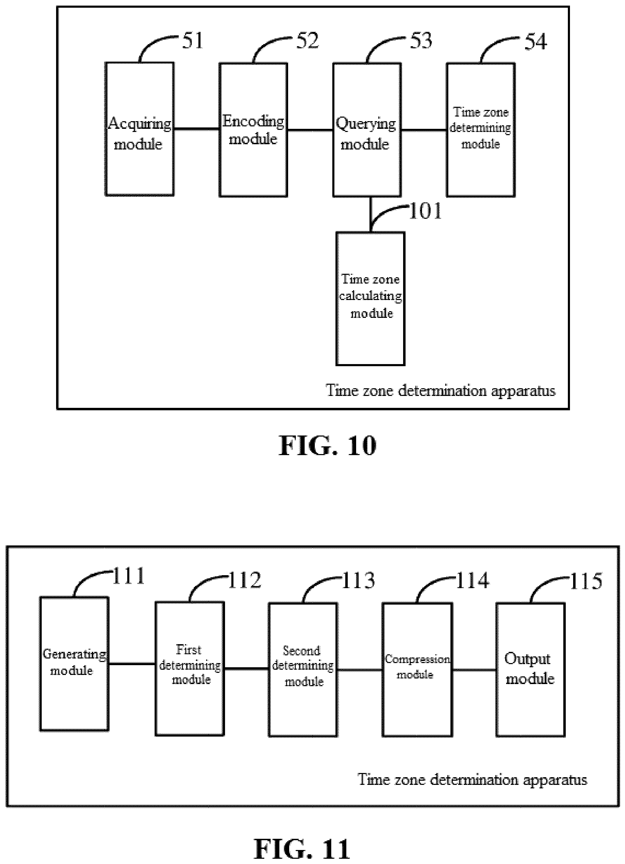

In an embodiment, on the basis of the apparatus shown in FIG. 5, as shown in FIG. 10, the apparatus further includes:
a time zone calculation module 101, configured to calculate the time zone in which the first terminal is located at present according to longitude information in the longitude and latitude data if it is determined that the first time zone is not found.

As shown in FIG. 11, FIG. 11 is a block diagram of another time zone determination apparatus shown according to an exemplary embodiment of the present disclosure. The apparatus is based on the apparatus shown in FIG. 5, and is used for the second terminal that generates the specified mapping table, such as a PC or a high-performance computer, and is used for executing the process of generating the specified mapping table as shown in FIG. 4. As shown in FIG. 11, the apparatus may include:
a generating module 111, configured to generate a first list, the first list including a first quantity of set character strings, and the set character strings being constructed by the second terminal according to a specified encoding algorithm rule;
a first determining module 112, configured to determine latitude and longitude coordinates corresponding to the set character strings to obtain a second mapping table, the second mapping table including the set character strings and the latitude and longitude coordinates corresponding to the set character strings;
a second determining module 113, configured to determine time zones corresponding to the latitude and longitude coordinates respectively, and use the determined time zones as the time zone of the corresponding set character strings to obtain a third mapping table, the third mapping table including the set character strings and the time zones corresponding to the set character strings;
a compression module 114, configured to filter and aggregate the third mapping table to obtain the specified mapping table for time zone determination, the specified mapping table including a corresponding relationship between the specified character strings and the specified time zones; and
an output module 115, configured to output the specified mapping table.

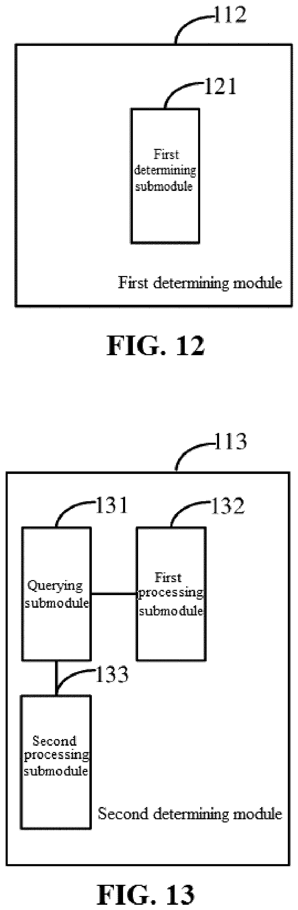

In an embodiment, on the basis of the apparatus shown in FIG. 11, as shown in FIG. 12, the first determining module 112 may include:
a first determining submodule 121, configured to determine the latitude and longitude coordinates corresponding to the set character strings through a decoding algorithm corresponding to the specified encoding algorithm.

In an embodiment, on the basis of the apparatus shown in FIG. 11, as shown in FIG. 13, the second determining module 113 may include:
a querying submodule 131, configured to query the time zone corresponding to the latitude and longitude coordinates in an on-line public service interface calling mode;
a first processing submodule 132, configured to set the found time zone to be the time zone corresponding to the set character strings if the time zone corresponding to the latitude and longitude coordinates is found; and
a second processing submodule 133, configured to set the time zone corresponding to the set character strings to null if the time zone corresponding to the latitude and longitude coordinates is not found.

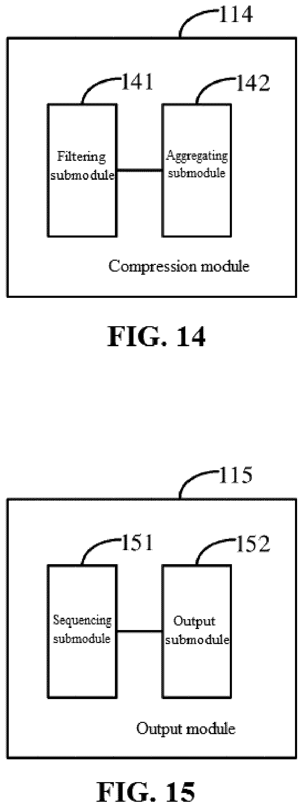

In an embodiment, on the basis of the apparatus shown in FIG. 11, as shown in FIG. 14, the compression module 114 may include:
a filtering submodule 141, configured to remove the set character strings in the third mapping table without the corresponding time zone found or without a corresponding time zone to obtain a filtered fourth mapping table; and
an aggregating submodule 142, configured to aggregate the set character strings having the same character string prefix and corresponding to the same time zone in the fourth mapping table to obtain the specified mapping table, where the specified character string in the specified mapping table is the prefix of the set character strings, and the specified time zones are the time zone corresponding to the set character strings.

In an embodiment, on the basis of the apparatus shown in FIG. 11, as shown in FIG. 15, the output module 115 includes:
a sequencing submodule 151, configured to sequence all the specified character strings in the specified mapping table according to a specified sequence; and
an output submodule 152, configured to output the ordered specified mapping table.

In an embodiment, on the basis of the apparatus shown in FIG. 11 or FIG. 12, the specified encoding algorithm includes a GeoHash algorithm or a Google-S2 algorithm.

From the above embodiments, it can be seen that a first list can be firstly generated, then the latitude and longitude coordinates corresponding to the set character strings are determined to obtain the second mapping table. The time zones corresponding to the latitude and longitude coordinates are determined, and the determined time zones are used as the time zones of the corresponding set character strings to obtain the third mapping table. Then the third mapping table is filtered and aggregated to obtain the specified mapping table for time zone determination, and the specified mapping table includes a corresponding relationship between the specified character strings and the specified time zones. The ordered specified mapping table is output. Therefore, the first terminal in an offline state can conveniently use the specified mapping table to perform time zone determination, so that the realization modes of the time zone determination are enriched, and the practicability of the time zone determination is improved. Additionally, the size of the mapping table after filtration and aggregation does not reach 1 MB, so that the specified mapping table is more suitable to be used in a terminal with storage limitation.

Referring to the realization processes of the corresponding steps in the above methods for the realization processes of the functions and effects of each unit in the above apparatus, and they are not repeated here. For the apparatus embodiment, it is basically corresponding to the method embodiment, so the partial descriptions of the method embodiment may be taken as the reference for relevant parts. The apparatus embodiments described above are only illustrative, the units illustrated as separation components may or may not be physically separated, and a component displayed as a unit may or may be a physical unit. That is, they may be located in one place, or may be distributed on a plurality of network units. Some or total modules therein can be selected to achieve the objective of the solution of the present disclosure according to practical requirements. Those of ordinary skill in the art can understand and practice without any inventive effort.

Corresponding to FIG. 5, the present disclosure further provides another time zone determination apparatus. The apparatus is used for a first terminal and includes:
a processor; and
a memory, configured to store processor executable instructions.

The processor is configured to:
acquire first data for characterizing a geographic location at which a first terminal is located, the first data being two-dimensional latitude and longitude data;
convert the first data into second data according to a specified encoding algorithm, the second data being one-dimensional character string data;
query a first time zone corresponding to the second data in a specified mapping table for time zone determination, the specified mapping table including correspondence relationships between specified character strings and specified time zones; and
determine the first time zone to be the time zone in which the first terminal is located if it is determined that the first time zone is found.

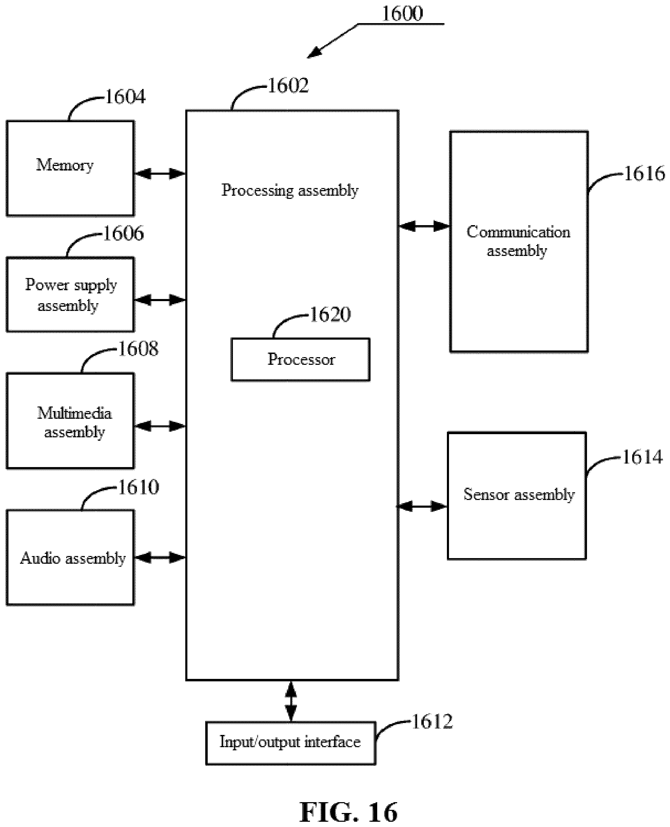

As shown in FIG. 16, FIG. 16 is a schematic structure diagram (a first terminal side) of an apparatus 1600 applicable to time zone determination shown according to an exemplary embodiment of the present disclosure. For example, the apparatus 1600 may be a mobile phone, a computer, a digital broadcasting terminal, a message sending and receiving device, a game console, a tablet device, a medical device, a fitness device, a personal digital assistant, etc., with a routing function.

Referring to FIG. 16, the apparatus 1600 may include one or more of the following assemblies: a processing assembly 1602, a memory 1604, a power supply assembly 1606, a multimedia assembly 1608, an audio assembly 1610, an input/output (I/O) interface 1612, a sensor assembly 1614, and a communication assembly 1616.

The processing assembly 1602 generally controls overall operations of the apparatus 1600, such as operations associated with display, phone calls, data communication, camera operations, and recording operations. The processing assembly 1602 may include one or more processors 1620 to execute instructions to complete all or parts of the steps of the above method. Additionally, the processing assembly 1602 may include one or more modules to facilitate interaction between the processing assembly 1602 and other assemblies. For example, the processing assembly 1602 may include a multimedia module to facilitate interaction between the multimedia assembly 1608 and the processing assembly 1602.

The memory 1604 is configured to store various types of data to support operations at the apparatus 1600. Examples of these data include instructions for any application programs or methods operated on the apparatus 1600, contact data, phone book data, messages, pictures, videos, etc. The memory 1604 may be implemented by any type of volatile or nonvolatile storage devices or a combination thereof, such as a static random access memory (SRAM), an electrically erasable programmable read-only memory (EEPROM), an erasable and removable programmable read-only memory (EPROM), a programmable read-only memory (PROM), a read-only memory (ROM), a magnetic memory, a flash memory, a magnetic disk, or an optical disk.

The power supply assembly 1606 provides electric power for various assemblies of the apparatus 1600. The power supply assembly 1606 may include a power supply management system, one or more power supplies, and other assemblies associated with generating, managing, and distributing electric power for the apparatus 1600.

The multimedia assembly 1608 includes a screen providing an output interface between the apparatus 1600 and a user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, sliding, and gestures on the touch panel. The touch sensor can sense the boundary of the touch or sliding action, and can also detect the duration and pressure related to the touch or sliding operation. In some embodiments, the multimedia assembly 1608 includes a front camera and/or a rear camera. When the apparatus 1600 is in an operation mode, such as a shooting mode or a video mode, the front camera and/or the rear camera can receive external multimedia data. Each of the front camera and rear camera may be a fixed optical lens system or may have focal length and optical zooming capabili ti es.

The audio assembly 1610 is configured to output and/or input audio signals. For example, the audio assembly 1610 includes a microphone (MIC). When the apparatus 1600 is in an operation mode, such as a call mode, a recording mode, and a voice recognition mode, the microphone is configured to receive an external audio signal. The received audio signal may be further stored in the memory 1604 or sent through the communication assembly 1616. In some embodiments, the audio assembly 1610 further includes a speaker configured to output the audio signals.

The I/O interface 1612 provides an interface between the processing assembly 1602 and a peripheral interface module. The above peripheral interface module may be a keyboard, a click wheel, buttons, etc. These buttons may include, but are not limited, to a home button, a volume button, a start button, and a lock button.

The sensor assembly 1614 includes one or more sensors for providing status assessments in various aspects for the apparatus 1600. For example, the sensor assembly 1614 can detect an on/off state of the apparatus 1600, and the relative positioning of the assemblies. For example, the assembly is a display and a keypad of the apparatus 1600, and the sensor assembly 1614 can further detect the position change of the apparatus 1600 or one assembly of the apparatus 1600, the presence or absence of contact between a user and the apparatus 1600, the orientation or acceleration/deceleration of the apparatus 1600, and the temperature change of the apparatus 1600. The sensor assembly 1614 may include a proximity sensor configured to detect the presence of nearby objects when there is no physical contact. The sensor assembly 1614 may further include a light sensor, such as a CMOS or CCD image sensor, and is configured to use in an imaging application. In some embodiments, the sensor assembly 1614 may further include an acceleration sensor, a gyro sensor, a magnetic sensor, a pressure sensor, a microwave sensor, or a temperature sensor.

The communication assembly 1616 is configured to facilitate wired or wireless communication between the apparatus 1600 and other devices. The apparatus 1600 may be accessed into a wireless network based on a communication standard, such as WiFi, 2G, or 3G, or a combination thereof. In an exemplary embodiment, the communication assembly 1616 receives a broadcast signal or broadcast-related information from an external broadcast management system via a broadcast channel. In an exemplary embodiment, the communication assembly 1616 further includes a near field communication (NFC) module to facilitate short-range communication. For example, the NFC module can be implemented based on a radio frequency identification (RFID) technology, an infrared data association (IrDA) technology, an ultra-wideband (UWB) technology, a Bluetooth (BT) technology, and other technologies.

In an exemplary embodiment, the apparatus 1600 may be realized by one or a plurality of application specific integrated circuits (ASIC), a digital signal processor (DSP), a digital signal processing device (DSPD), a programmable logic device (PLD), a field programmable gate array (FPGA), a controller, a microcontroller, a microprocessor, or other electronic elements, and is used to execute the following method:
acquiring first data for characterizing a geographic location at which the first terminal is located, the first data being two-dimensional latitude and longitude data;
converting the first data into second data according to a specified encoding algorithm, the second data being one-dimensional character string data;
querying a first time zone corresponding to the second data in a specified mapping table for time zone determination, the specified mapping table including correspondence relationships between specified character strings and specified time zones; and
determining the first time zone to be the time zone in which the first terminal is located if it is determined that the first time zone is found.

In an exemplary embodiment, a non-transitory computer-readable storage medium including instructions, such as a memory 1604 including instructions, is also provided, and the above instructions can be executed by the processor 1620 of the apparatus 1600 to perform the above method. For example, the non-transitory computer-readable storage medium may be a ROM, a RAM, a CD-ROM, a magnetic tape, a floppy disk, an optical data storage device, etc.

Corresponding to FIG. 11, the present disclosure further provides another time zone determination apparatus. The apparatus is used for a second terminal that generates the specific mapping table and includes:
a processor; and
a memory configured to store processor executable instructions.

The processor is configured to
generate a first list, the first list including a first quantity of set character strings, and the set character strings being constructed by the second terminal according to a specified encoding algorithm rule;
determine latitude and longitude coordinates corresponding to the set character strings to obtain a second mapping table, the second mapping table including the set character strings and the latitude and longitude coordinates corresponding to the set character strings;
determine time zones corresponding to the latitude and longitude coordinates, and use the determined time zones as the time zones of the corresponding set character strings to obtain a third mapping table, the third mapping table including the set character strings and the time zones corresponding to the set character strings;
filter and aggregate the third mapping table to obtain the specified mapping table for time zone determination, the specified mapping table including a corresponding relationship between the specified character strings and the specified time zones; and
output the specified mapping table.

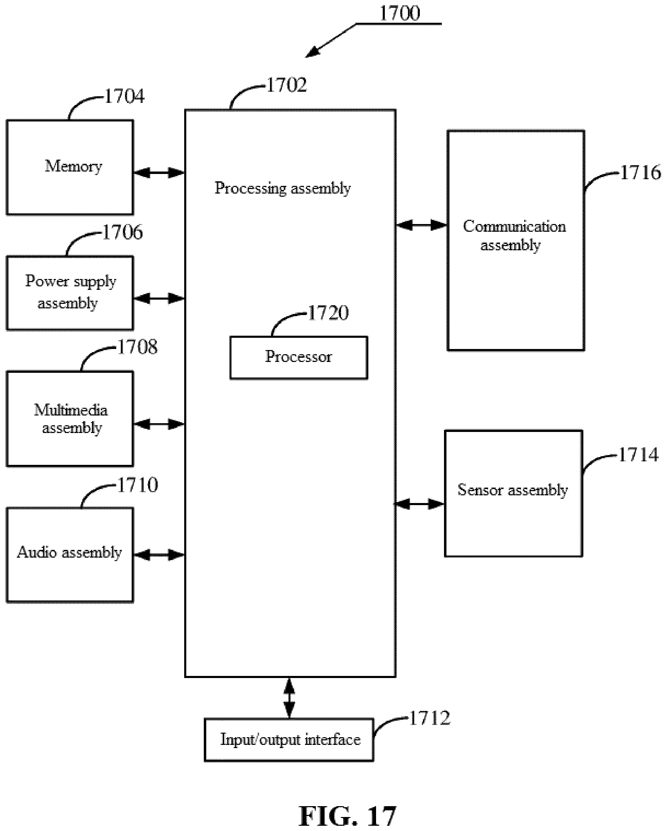

As shown in FIG. 17, FIG. 17 is a schematic structure diagram (a second terminal side) of an apparatus 1700 applicable to time zone determination shown according to an exemplary embodiment of the present disclosure. For example, the apparatus 1700 may be a mobile phone, a computer, a digital broadcasting terminal, a message sending and receiving device, a game console, a tablet device, a medical device, a fitness device, a personal digital assistant, etc., with a routing function.

Referring to FIG. 17, the apparatus 1700 may include one or more of the following assemblies: a processing assembly 1702, a memory 1704, a power supply assembly 1706, a multimedia assembly 1708, an audio assembly 1710, an input/output (I/O) interface 1712, a sensor assembly 1714, and a communication assembly 1716.

The processing assembly 1702 generally controls overall operations of the control apparatus 1700, such as operations associated with display, phone calls, data communication, camera operation, and recording operations. The processing assembly 1702 may include one or more processors 1720 to execute instructions to complete all or parts of the steps of the above method. Additionally, the processing assembly 1702 may include one or more modules to facilitate interaction between the processing assembly 1702 and other assemblies. For example, the processing assembly 1702 may include a multimedia module to facilitate interaction between the multimedia assembly 1708 and the processing assembly 1702.

The memory 1704 is configured to store various types of data to support operations at the apparatus 1700. Examples of these data include instructions for any application programs or methods operated on the apparatus 1700, contact data, phone book data, messages, pictures, videos, etc. The memory 1704 may be implemented by any type of volatile or nonvolatile storage devices or a combination thereof, such as a static random access memory (SRAM), an electrically erasable programmable read-only memory (EEPROM), an erasable and removable programmable read-only memory (EPROM), a programmable read-only memory (PROM), a read-only memory (ROM), a magnetic memory, a flash memory, a magnetic disk, or an optical disk.

The power supply assembly 1706 provides electric power for various assemblies of the apparatus 1700. The power supply assembly 1706 may include a power management system, one or more power supplies, and other assemblies associated with generating, managing, and distributing electric power for the apparatus 1700.

The multimedia assembly 1708 includes a screen providing an output interface between the apparatus 1700 and a user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, sliding, and gestures on the touch panel. The touch sensor can sense the boundary of the touch or sliding action, and can also detect the duration and pressure related to the touch or sliding operation. In some embodiments, the multimedia assembly 1708 includes a front camera and/or a rear camera. When the apparatus 1700 is in an operation mode, such as a shooting mode or a video mode, the front camera and/or the rear camera can receive external multimedia data. Each of the front camera and rear camera may be a fixed optical lens system or may have focal length and optical zooming capabili ti es.

The audio assembly 1710 is configured to output and/or input audio signals. For example, the audio assembly 1710 includes a microphone (MIC). When the apparatus 1700 is in an operation mode, such as a call mode, a recording mode, and a voice recognition mode, the microphone is configured to receive an external audio signal. The received audio signal may be further stored in the memory 1704 or sent through the communication assembly 1716. In some embodiments, the audio assembly 1710 further includes a speaker configured to output the audio signals.

The I/O interface 1712 provides an interface between the processing assembly 1702 and a peripheral interface module. The above peripheral interface module may be a keyboard, a click wheel, buttons, etc. These buttons may include, but are not limited to a home button, a volume button, a start button, and a lock button.

The sensor assembly 1714 includes one or more sensors for providing status assessments in various aspects for the apparatus 1700. For example, the sensor assembly 1714 can detect an on/off state of the apparatus 1700, and the relative positioning of the assemblies. For example, the assembly is a display and a keypad of the apparatus 1700, and the sensor assembly 1714 can further detect the position change of the apparatus 1700 or one assembly of the apparatus 1700, the presence or absence of contact between a user and the apparatus 1700, the orientation or acceleration/deceleration of the apparatus 1700, and the temperature change of the apparatus 1700. The sensor assembly 1714 may include a proximity sensor configured to detect the presence of nearby objects when there is no physical contact. The sensor assembly 1714 may further include a light sensor, such as a CMOS or CCD image sensor, and is configured to use in an imaging application. In some embodiments, the sensor assembly 1714 may further include an acceleration sensor, a gyro sensor, a magnetic sensor, a pressure sensor, a microwave sensor, or a temperature sensor.

The communication assembly 1716 is configured to facilitate wired or wireless communication between the apparatus 1700 and other devices. The apparatus 1700 may be accessed into a wireless network based on a communication standard, such as WiFi, 2G, or 3G, or a combination thereof. In an exemplary embodiment, the communication assembly 1716 receives a broadcast signal or broadcast-related information from an external broadcast management system via a broadcast channel. In an exemplary embodiment, the communication assembly 1716 further includes a near field communication (NFC) module to facilitate short-range communication. For example, the NFC module can be implemented based on a radio frequency identification (RFID) technology, an infrared data association (IrDA) technology, an ultra-wideband (UWB) technology, a Bluetooth (BT) technology and other technologies.

In an exemplary embodiment, the apparatus 1700 may be realized by one or a plurality of application specific integrated circuits (ASIC), a digital signal processor (DSP), a digital signal processing device (DSPD), a programmable logic device (PLD), a field programmable gate array (FPGA), a controller, a microcontroller, a microprocessor, or other electronic elements, and is used to execute the following method:
generating a first list, the first list including a first quantity of set character strings, and the set character strings being constructed by the second terminal according to a specified encoding algorithm rule;
determining latitude and longitude coordinates corresponding to the set character strings to obtain a second mapping table, the second mapping table including the set character strings and the latitude and longitude coordinates corresponding to the set character strings;
determining time zones corresponding to the latitude and longitude coordinates, the determined time zones being used as the time zones of the corresponding set character strings to obtain a third mapping table, and the third mapping table including the set character strings and the time zones corresponding to the set character strings;
filtering and aggregating the third mapping table to obtain the specified mapping table for time zone determination, the specified mapping table including a corresponding relationship between the specified character strings and the specified time zones; and
outputting the specified mapping table.

In an exemplary embodiment, a non-transitory computer-readable storage medium including instructions, such as a memory 1704 including instructions, is also provided, and the above instructions can be executed by the processor 1720 of the apparatus 1700 to perform the above method. For example, the non-transitory computer-readable storage medium may be a ROM, a RAM, a CD-ROM, a magnetic tape, a floppy disk, an optical data storage device, etc.

Correspondingly, the present disclosure further provides a wearable device, including the time zone determination apparatus according to any one of FIG. 5 to FIG. 10 and executing the time zone determination method according to the claims and any one of FIG. 1 to FIG. 3, where the first terminal is the wearable device.

Correspondingly, the present disclosure further provides a time zone determination system. The time zone determination system includes a first terminal and/or a second terminal, the first terminal includes the time zone determination apparatus according to any one of FIG. 5 to FIG. 10 and executes the time zone determination method according to any one of FIG. 1 to FIG. 3; and includes the time zone determination apparatus according to any one of FIG. 11 to FIG. 15 and executes the process of generating the specified mapping table according to FIG. 4.

The first terminal and the second terminal may be different terminals. The first terminal is an application party of the specified mapping table, and the second terminal is a generation party of the specified mapping table. For example, the time zone determination system includes a first terminal and a second terminal. The first terminal is a wearable device, and the second terminal is a high-performance computer. Additionally, the first terminal uses the specified mapping table to determine the time zone, and the second terminal generates a specified mapping table for time zone determination, and provides the specified mapping table for the first terminal.

Additionally, the first terminal and the second terminal may be the same terminal. The terminal is both the application party of the specified mapping table and the generation party of the specified mapping table. For example, both the first terminal and the second terminal are high-performance computers, and additionally, the high-performance computers can generate the specified mapping table for time zone determination, and can determine the time zone in which the terminals are located by using the specified mapping table.

After considering the description and practicing the invention disclosed herein, those skilled in the art will easily think of other implementations of the present application. The present application is intended to cover any variations, uses, or adaptive changes of the present application, these variations, uses, or adaptive changes follow the general principles of the present application and include common general knowledge or conventional technical measures in the technical field not disclosed in the present application. The specification and embodiments are only considered to be exemplary, and the true scope and spirit of the present application are pointed out by the appended claims.

It should also be noted that the terms "comprise", "include" or any other variants thereof are intended to cover non-exclusive inclusion, so that a process, method, commodity, or device including a series of elements not only include those elements, but also include other elements not explicitly listed, or include inherent elements of this process, method, commodity, or device. Under the condition without more restrictions, the element defined by the sentence "include one..." does not exclude that there are other identical elements in the process, method, commodity, or device including the element.

The above are only the preferred embodiments of the present disclosure and are not intended to limit the present disclosure. Any modification, equivalent replacement, improvement, etc. made within the spirit and principle of the present disclosure shall fall within the protection scope of the present disclosure.

## Claims

1. A time zone determination method, **characterised in that** the method is used for a first terminal and comprises:
acquiring first data for characterizing a geographic location at which the first terminal is located, the first data being two-dimensional latitude and longitude data;
converting the first data into second data according to a specified encoding algorithm, the second data being one-dimensional character string data;
querying a first time zone corresponding to the second data in a specified mapping table for time zone determination, the specified mapping table comprising correspondence relationships between specified character strings and specified time zones; and
if it is determined that the first time zone is found, determining the first time zone to be the time zone in which the first terminal is located.

2. The method according to claim 1, **characterised in that** the acquiring first data comprises:
acquiring the first data through a specified positioning module.

3. The method according to claim 1, **characterised in that** the querying a first time zone corresponding to the second data in a specified mapping table for time zone determination comprises:
determining a character string querying condition, the character string querying condition comprising querying a prefix of a character string to be queried matched with the specified character string in the specified mapping table;
performing character string querying in the specified mapping table according to the character string querying condition, the second data being the character string to be queried;
if a prefix of the second data matched with the specified character string is found in the specified mapping table, determining a time zone corresponding to the specified character string matched with the prefix of the second data as the first time zone, and determining that the first time zone is found; and
if the prefix of the second data is not found in the specified mapping table, determining that the first time zone is not found.

4. The method according to claim 1, **characterised in that** the specified mapping table is a mapping table obtained by a second terminal aggregating all set character strings having the same character string prefix and corresponding to the same time zone, the set character strings being constructed by the second terminal according to a specified encoding algorithm rule; and
the specified character string is a prefix of the set character strings, and the specified time zones are time zones corresponding to the set character strings respectively.

5. The method according to claim 1, **characterised in that** the specified mapping table is used as a firmware resource file deployed in a storage space of the first terminal.

6. The method according to claim 5, **characterised in that** before the querying a first time zone corresponding to the second data in a specified mapping table for time zone determination, the method further comprises:
reading out the specified mapping table from the storage space, and storing the specified mapping table in a memory in a specified storage mode; and
the querying a first time zone corresponding to the second data in a specified mapping table for time zone determination comprises:
determining a querying mode corresponding to the specified storage mode; and
querying the first time zone corresponding to the second data in the specified mapping table according to the corresponding querying mode.

7. The method according to claim 6, **characterised in that** the specified storage mode comprises a hash storage mode or an ordered storage mode; and
the determining a querying mode corresponding to the specified storage mode comprises:
if the specified storage mode is the hash storage mode, determining that the corresponding querying mode is a direct querying mode; and
if the specified storage mode is the ordered storage mode, determining that the corresponding querying mode is a binary querying mode.

8. The method according to claim 1 or 3, **characterised in that** the method further comprises:
if it is determined that the first time zone is not found, calculating the time zone in which the first terminal is located at present according to longitude information in the longitude and latitude data.

9. The method according to claim 4, **characterised in that** the method is used for the second terminal that generates the specified mapping table, and comprises:
generating a first list, the first list comprising a first quantity of set character strings, and the set character strings being constructed by the second terminal according to the specified encoding algorithm rule;
determining latitude and longitude coordinates corresponding to the set character strings to obtain a second mapping table, the second mapping table comprising the set character strings and the latitude and longitude coordinates corresponding to the set character strings;
determining time zones corresponding to the latitude and longitude coordinates, and using the determined time zones as the time zones of the corresponding set character strings to obtain a third mapping table, the third mapping table comprising the set character strings and the time zones corresponding to the set character strings;
filtering and aggregating the third mapping table to obtain the specified mapping table for time zone determination, the specified mapping table comprising a corresponding relationship between the specified character strings and the specified time zones; and
outputting the specified mapping table.

10. The method according to claim 9, **characterised in that** the determining latitude and longitude coordinates corresponding to the set character strings comprises:
determining the latitude and longitude coordinates corresponding to the set character strings through a decoding algorithm corresponding to the specified encoding algorithm.

11. The method according to claim 9, **characterised in that** the determining time zones corresponding to the latitude and longitude coordinates comprises:
querying the time zones corresponding to the latitude and longitude coordinates in an on-line public service interface calling mode;
if the time zones corresponding to the latitude and longitude coordinates are found, setting the found time zones to be the time zones corresponding to the set character strings; and
if the time zones corresponding to the latitude and longitude coordinates are not found, setting the time zones corresponding to the set character strings to null.

12. The method according to claim 9, **characterised in that** the filtering and aggregating the third mapping table according to a set rule comprises:
removing the set character strings in the third mapping table without a corresponding time zone found or without a corresponding time zone to obtain a filtered fourth mapping table; and
aggregating the set character strings having the same character string prefix and corresponding to the same time zone in the fourth mapping table to obtain the specified mapping table, wherein the specified character string in the specified mapping table is the prefix of the set character strings, and the specified time zones are the time zones corresponding to the set character strings.

13. The method according to claim 9, **characterised in that** the outputting the specified mapping table comprises:
sequencing all the specified character strings in the specified mapping table according to a specified sequence; and
outputting the ordered specified mapping table.

14. The method according to claim 1, 4, 9, or 10, **characterised in that** the specified encoding algorithm comprises a GeoHash algorithm or a Google-S2 algorithm.

15. A time zone determination apparatus, **characterised in that** the apparatus is used for a first terminal and comprises:
an acquiring module, configured to acquire first data for characterizing a geographic location at which the first terminal is located, the first data being two-dimensional latitude and longitude data;
an encoding module, configured to convert the first data into second data according to a specified encoding algorithm, the second data being one-dimensional character string data;
a querying module, configured to query a first time zone corresponding to the second data in a specified mapping table for time zone determination, the specified mapping table comprising correspondence relationships between specified character strings and specified time zones; and
a time zone determining module, configured to determine the first time zone to be the time zone in which the first terminal is located if it is determined that the first time zone is found.

16. The apparatus according to claim 15, **characterised in that** the acquiring module comprises:
an acquiring submodule, configured to acquire the first data through a specified positioning module.

17. The apparatus according to claim 15, **characterised in that** the querying module comprises:
a querying condition determining submodule, configured to determine a character string querying condition, the character string querying condition comprising querying a prefix of a character string to be queried matched with the specified character string in the specified mapping table;
a first querying submodule, configured to perform character string querying in the specified mapping table according to the character string querying condition, the second data being the character string to be queried;
a first determining submodule, configured to determine a time zone corresponding to the specified character string matched with the prefix of the second data to be the first time zone, and determine that the first time zone is found if a prefix of the second data matched with the specified character string is found in the specified mapping table; and
a second determining submodule, configured to determine that the first time zone is not found if the prefix of the second data is not found in the specified mapping table.

18. The apparatus according to claim 15, **characterised in that** the specified mapping table is a mapping table after a second terminal aggregates all set character strings having the same character string prefix and corresponding to the same time zone, the set character strings being constructed by the second terminal according to a specified encoding algorithm rule; and
the specified character string is a prefix of the set character strings, and the specified time zones are time zones corresponding to the set character strings respectively.

19. The apparatus according to claim 15, **characterised in that** the specified mapping table is used as a firmware resource file deployed in a storage space of the first terminal.

20. The apparatus according to claim 19, **characterised in that** the apparatus further comprises:
a storage module, configured to read out the specified mapping table from the storage space, and store the specified mapping table in a memory in a specified storage mode; and
the querying module comprises:
a querying mode determining submodule, configured to determine a querying mode corresponding to the specified storage mode; and
a second querying submodule, configured to query the first time zone corresponding to the second data in the specified mapping table according to the corresponding querying mode.

21. The apparatus according to claim 20, **characterised in that** the specified storage mode comprises a hash storage mode or an ordered storage mode; and
the querying mode determining submodule comprises:
a first determining unit, configured to determine that the corresponding querying mode is a direct querying mode if the specified storage mode is the hash storage mode; and
a second determining unit, configured to determine that the corresponding querying mode is a binary querying mode if the specified storage mode is the ordered storage mode.

22. The apparatus according to claim 15 or 17, **characterised in that** further comprises:
a time zone calculation module, configured to calculate the time zone in which the first terminal is located at present according to longitude information in the longitude and latitude data if it is determined that the first time zone is not found.

23. The apparatus according to claim 18, **characterised in that** the apparatus is used for the second terminal that generates the specified mapping table, and comprises:
a generating module, configured to generate a first list, the first list comprising a first quantity of set character strings, and the set character strings being constructed by the second terminal according to the specified encoding algorithm rule;
a first determining module, configured to determine latitude and longitude coordinates corresponding to the set character strings to obtain a second mapping table, the second mapping table comprising the set character strings and the latitude and longitude coordinates corresponding to the set character strings;
a second determining module, configured to determine time zones corresponding to the latitude and longitude coordinates, and use the determined time zones as the time zones of the corresponding set character strings to obtain a third mapping table, the third mapping table comprising the set character strings and the time zones corresponding to the set character strings;
a compression module, configured to filter and aggregate the third mapping table to obtain the specified mapping table for time zone determination, the specified mapping table comprising a corresponding relationship between the specified character strings and the specified time zones; and
an output module, configured to output the specified mapping table.

24. The apparatus according to claim 23, **characterised in that** the first determining module comprises:
a first determining submodule, configured to determine the latitude and longitude coordinates corresponding to the set character strings through a decoding algorithm corresponding to the specified encoding algorithm.

25. The apparatus according to claim 23, **characterised in that** the second determining module comprises:
a querying submodule, configured to query the time zones corresponding to the latitude and longitude coordinates in an on-line public service interface calling mode;
a first processing submodule, configured to set the found time zones to be the time zones corresponding to the set character strings if the time zones corresponding to the latitude and longitude coordinates are found; and
a second processing submodule, configured to set the time zones corresponding to the set character strings to null if the time zones corresponding to the latitude and longitude coordinates are not found.

26. The apparatus according to claim 23, **characterised in that** the compression module comprises:
a filtering submodule, configured to remove the set character strings in the third mapping table without a corresponding time zone found or without the corresponding time zone to obtain a filtered fourth mapping table; and
an aggregating submodule, configured to aggregate the set character strings having the same character string prefix and corresponding to the same time zone in the fourth mapping table to obtain the specified mapping table, wherein the specified character string in the specified mapping table is the prefix of the set character strings, and the specified time zones are the time zones corresponding to the set character strings.

27. The apparatus according to claim 23, **characterised in that** the output module comprises:
a sequencing submodule, configured to sequence all the specified character strings in the specified mapping table according to a specified sequence; and
an output submodule, configured to output the ordered specified mapping table.

28. The apparatus according to claim 15, 18, 23, or 24, **characterised in that** the specified encoding algorithm comprises a GeoHash algorithm or a Google-S2 algorithm.

29. A time zone determination apparatus, **characterised in that** the apparatus is used for a first terminal and comprises:
a processor; and
a memory configured to store processor executable instructions,
wherein the processor is configured to:
acquire first data for characterizing a geographic location at which the first terminal is located, the first data being two-dimensional latitude and longitude data;
convert the first data into second data according to a specified encoding algorithm, the second data being one-dimensional character string data;
query a first time zone corresponding to the second data in a specified mapping table for time zone determination, the specified mapping table comprising correspondence relationships between specified character strings and specified time zones; and
determine the first time zone to be the time zone in which the first terminal is located if it is determined that the first time zone is found.

30. The apparatus according to claim 29, **characterised in that** the apparatus is used for a second terminal that generates the specified mapping table, and comprises:
a processor; and
a memory configured to store processor executable instructions,
wherein the processor is configured to
generate a first list, the first list comprising a first quantity of set character strings, and the set character strings being constructed by the second terminal according to a specified encoding algorithm rule;
determine latitude and longitude coordinates corresponding to the set character strings to obtain a second mapping table, the second mapping table comprising the set character strings and the latitude and longitude coordinates corresponding to the set character strings;
determine time zones corresponding to the latitude and longitude coordinates, and use the determined time zones as the time zones of the corresponding set character strings to obtain a third mapping table, the third mapping table comprising the set character strings and the time zones corresponding to the set character strings;
filter and aggregate the third mapping table to obtain the specified mapping table for time zone determination, the specified mapping table comprising a corresponding relationship between the specified character strings and the specified time zones; and
output the specified mapping table.

31. A wearable device, **characterised in that** the wearable device comprises the time zone determination apparatus according to any one of claims 15 to 22 and executing the time zone determination method according to any one of claims 1 to 8.

32. A time zone determination system, **characterised in that** the time zone determination system comprises a first terminal and/or a second terminal, the first terminal comprising the time zone determination apparatus according to any one of claims 15 to 22 and executing the time zone determination method according to any one of claims 1 to 8; and the second terminal comprising the time zone determination apparatus according to any one of claims 23 to 28 and executing the time zone determination method according to any one of claims 9 to 14.
